(19) Europäisches Patentamt
European Patent Office
Office européen des brevets

(11) **EP 4 215 969 A1**

(12) **EUROPEAN PATENT APPLICATION**

(43) Date of publication:
   26.07.2023 Bulletin 2023/30

(51) International Patent Classification (IPC):
   *G02B 13/00* (2006.01)   *G02B 9/64* (2006.01)

(21) Application number: 22205496.7

(22) Date of filing: 04.11.2022

(52) Cooperative Patent Classification (CPC):
   G02B 9/64; G02B 13/0045; G02B 13/006

(84) Designated Contracting States:
   AL AT BE BG CH CY CZ DE DK EE ES FI FR GB
   GR HR HU IE IS IT LI LT LU LV MC ME MK MT NL
   NO PL PT RO RS SE SI SK SM TR
   Designated Extension States:
   BA
   Designated Validation States:
   KH MA MD TN

(30) Priority: 19.01.2022 TW 111102117

(71) Applicant: Calin Technology Co., Ltd.
   Taichung City 427 (TW)

(72) Inventors:
   • HSU, Shu-Chuan
     427 Taichung City (TW)
   • LIN, Fun-Ru
     427 Taichung City (TW)

(74) Representative: Viering, Jentschura & Partner
   mbB
   Patent- und Rechtsanwälte
   Am Brauhaus 8
   01099 Dresden (DE)

(54) **OPTICAL IMAGING LENS**

(57) An optical imaging lens (100, 200, 300), in order from an object side to an image side along an optical axis, includes a first lens assembly (GI), an aperture, and a second lens assembly (G2). The first lens assembly (G1) includes a first lens (L1) having negative refractive power, a second lens (L2) having negative refractive power, and a third lens (L3) having positive refractive power. The second lens assembly (G2) includes a fourth lens (L4) having positive refractive power, a fifth lens (L5) having positive refractive power, a sixth lens (L6) having negative refractive power, and a seventh lens (L7) having positive refractive power. The optical imaging lens (100, 200, 300) satisfies: -0.5<F/fgl<-0.1; F is a focal length of the optical imaging lens (100, 200, 300) and fgl is a focal length of the first lens assembly (G1), thereby achieving the effect of high image quality.

FIG.1A

EP 4 215 969 A1

**Description**

**BACKGROUND OF THE INVENTION**

**Technical Field**

The present invention generally relates to an optical image capturing system, and more particularly to an optical imaging lens, which provides a better optical performance of high image quality and low distortion.

**Description of Related Art**

In recent years, with advancements in portable electronic devices having camera functionalities, the demand for an optical image capturing system is raised gradually. The image sensing device of the ordinary photographing camera is commonly selected from a charge-coupled device (CCD) or a complementary metal-oxide-semiconductor sensor (CMOS Sensor). Besides, as advanced semiconductor manufacturing technology enables the minimization of the pixel size of the image sensing device, the development of the optical image capturing system towards the field of high pixels. Moreover, with the advancement in drones and driverless autonomous vehicles, Advanced Driver Assistance System (ADAS) plays an important role, collecting environmental information through various lenses and sensors to ensure the driving safety of the driver. Furthermore, as the image quality of the automotive lens changes with the temperature of an external application environment, the temperature requirements of the automotive lens also increase. Therefore, the requirement for high imaging quality is rapidly raised.

Good imaging lenses generally have the advantages of low distortion, high resolution, etc. In practice, small size and cost must be considered. Therefore, it is a big problem for designers to design a lens with good imaging quality under various constraints.

**BRIEF SUMMARY OF THE INVENTION**

In view of the reasons mentioned above, the primary objective of the present invention is to provide an optical imaging lens that provides a better optical performance of high image quality.

The present invention provides an optical imaging lens, in order from an object side to an image side along an optical axis, including a first lens assembly, an aperture, and a second lens assembly, wherein the first lens assembly includes, in order from the object side to the image side along the optical axis, a first lens having negative refractive power, a second lens that is a biconcave lens having negative refractive power, and a third lens that is a biconvex lens having positive refractive power. An object-side surface of the first lens is a convex surface toward the object side, and an image-side surface of the first lens is a concave surface toward the image side. The second lens assembly includes, in order from the object side to the image side along the optical axis, a fourth lens that is a biconvex lens having positive refractive power, a fifth lens that is a biconvex lens having positive refractive power, a sixth lens that is a biconcave lens having negative refractive power, and a seventh lens that is a biconvex lens having positive refractive power, wherein an object-side surface of the fourth lens and/or an image-side surface of the fourth lens are/is an aspheric surface. An object-side surface of the sixth lens and an image-side surface of the fifth lens are adhered to form a compound lens having negative refractive power. An object-side surface of the seventh lens and/or an image-side surface of the seventh lens are/is an aspheric surface. The optical imaging lens satisfies: $-0.5 < F/fg1 < -0.1$; F is a focal length of the optical imaging lens and fg1 is a focal length of the first lens assembly.

With the aforementioned design, the optical imaging lens includes seven lenses, which could effectively improve a chromatic aberration of the optical imaging lens. In addition, the arrangement of the refractive powers and the conditions of the optical imaging lens of the present invention could achieve the effect of high image quality.

**BRIEF DESCRIPTION OF THE SEVERAL VIEWS OF THE DRAWINGS**

The present invention will be best understood by referring to the following detailed description of some illustrative embodiments in conjunction with the accompanying drawings, in which

FIG. 1A is a schematic view of the optical imaging lens according to a first embodiment of the present invention;
FIG. 1B is a diagram showing the longitudinal aberration of the optical imaging lens according to the first embodiment of the present invention;
FIG. 1C is a diagram showing the lateral spherical aberration of the optical imaging lens according to the first embodiment of the present invention;
FIG. 2A is a schematic view of the optical imaging lens according to a second embodiment of the present invention;

FIG. 2B is a diagram showing the longitudinal aberration of the optical imaging lens according to the second embodiment of the present invention;

FIG. 2C is a diagram showing the lateral spherical aberration of the optical imaging lens according to the second embodiment of the present invention;

FIG. 3A is a schematic view of the optical imaging lens according to a third embodiment of the present invention;

FIG. 3B is a diagram showing the longitudinal aberration of the optical imaging lens according to the third embodiment of the present invention; and

FIG. 3C is a diagram showing the lateral spherical aberration of the optical imaging lens according to the third embodiment of the present invention.

## DETAILED DESCRIPTION OF THE INVENTION

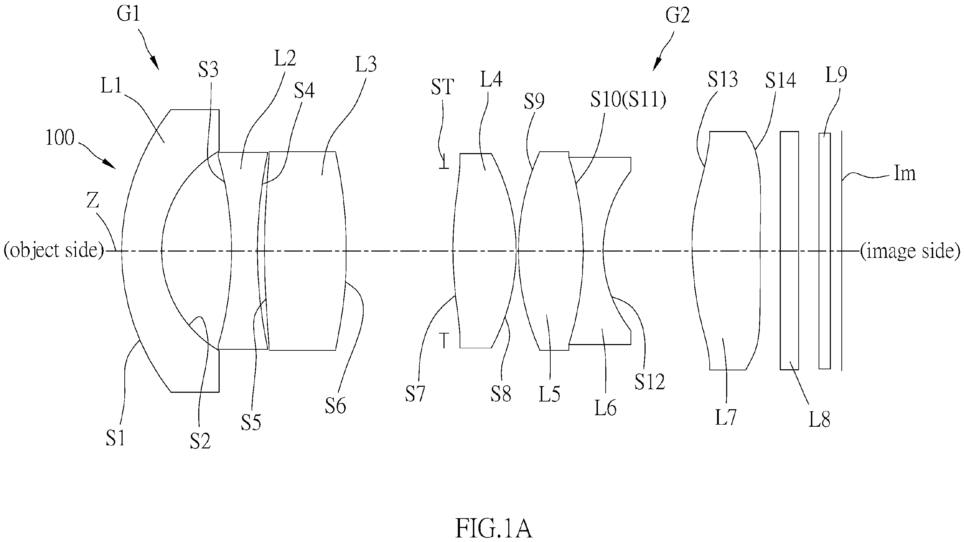

An optical imaging lens 100 according to a first embodiment of the present invention is illustrated in FIG. 1A, which includes, in order along an optical axis Z from an object side to an image side, a first lens assembly G1, an aperture ST, and a second lens assembly G2. In the current embodiment, the first lens assembly G1 includes, in order along the optical axis Z from the object side to the image side, a first lens L1, a second lens L2, and a third lens L3; the second lens assembly G2 includes, in order along the optical axis Z from the object side to the image side, a fourth lens L4, a fifth lens L5, a sixth lens L6, and a seventh lens L7.

The first lens L1 is a negative meniscus; an object-side surface S1 of the first lens L1 is a convex surface toward the object side, and an image-side surface S2 of the first lens L1 is a concave surface toward the image side. As shown in FIG. 1A, a part of a surface of the first lens L1 toward the image side is recessed to form the image-side surface S2, and the optical axis Z passes through the object-side surface S1 and the image-side surface S2 of the first lens L1.

The second lens L2 is a biconcave lens (i.e., both of an object-side surface S3 of the second lens L2 and an image-side surface S4 of the second lens L2 are concave surfaces) with negative refractive power.

The third lens is a biconvex lens (i.e., both of an object-side surface S5 of the third lens L3 and an image-side surface S6 of the third lens L3 are convex surfaces) with positive refractive power.

The fourth lens L4 is a biconvex lens (i.e., both of an object-side surface S7 of the fourth lens L4 and an image-side surface S8 of the fourth lens L4 are convex surfaces) with positive refractive power; the object-side surface S7, the image-side surface S8, or both of the object-side surface S7 and the image-side surface S8 of the fourth lens L4 are aspheric surfaces. As shown in FIG. 1A, both of the object-side surface S7 and the image-side surface S8 of the fourth lens L4 are aspheric surfaces.

The fifth lens L5 is a biconvex lens (i.e., both of an object-side surface S9 of the fifth lens L5 and an image-side surface S10 of the fifth lens L5 are convex surfaces) with positive refractive power. As shown in FIG. 1A, a part of a surface of the fifth lens L5 toward the image side is convex to form the image-side surface S10, and the optical axis Z passes through the object-side surface S9 and the image-side surface S10 of the fifth lens L5.

The sixth lens L6 is a biconcave lens (i.e., both of an object-side surface S11 of the sixth lens L6 and an image-side surface S12 of the sixth lens L6 are concave surfaces) with negative refractive power, wherein the object-side surface S1 of the sixth lens L6 and the image-side surface S10 of the fifth lens L5 are adhered to form a same surface. As shown in FIG. 1A, a part of a surface of the sixth lens L6 toward the image side is recessed to form the image-side surface S12, and the optical axis Z passes through the object-side surface S11 and the image-side surface S12 of the sixth lens L6.

The seventh lens L7 is a biconvex lens (i.e., both of an object-side surface S13 of the seventh lens L7 and an image-side surface S14 of the seventh lens L7 are convex surfaces) with positive refractive power; the object-side surface S13, the image-side surface S14, or both of the object-side surface S13 and the image-side surface S14 of the seventh lens L7 are aspheric surfaces. As shown in FIG. 1A, both of the object-side surface S13 and the image-side surface S14 of the seventh lens L7 are aspheric surfaces.

Additionally, the optical imaging lens 100 further includes an infrared filter L8 and a protective glass L9, wherein the infrared filter L8 is disposed between the seventh lens L7 and the protective glass L9, thereby filtering out excess infrared rays in an image light passing through the first lens assembly G1 and the second lens assembly G2. The protective glass L9 for protecting the infrared filter L8 is disposed between the infrared filter L8 and an image plane Im of the optical imaging lens 100.

In order to keep the optical imaging lens 100 in good optical performance and high imaging quality, the optical imaging lens 100 further satisfies:

(1) $-0.5 < F/fg1 < -0.1$;
(2) $-0.15 < F/f1 < -0.45$; $-0.8 < F/f2 < -0.5$; $0.4 < F/f3 < 0.7$;
(3) $0.5 < F/f4 < 0.7$; $0.7 < F/f5 < 1.5$; $-1.7 < F/f6 < -1$; $0.2 < F/f7 < 0.6$;
(4) $-0.25 < F/f56 < -0.1$;

wherein F is a focal length of the optical imaging lens 100; f1 is a focal length of the first lens L1; f2 is a focal length of the second lens L2; f3 is a focal length of the third lens L3; f4 is a focal length of the fourth lens L4; f5 is a focal length of the fifth lens L5; f6 is a focal length of the sixth lens L6; f56 is a focal length of a compound lens formed by adhering the fifth lens L5 and the sixth lens L6; f7 is a focal length of the seventh lens L7; fg1 is a focal length of the first lens assembly G1; fg2 is a focal length of the second lens assembly G2.

Parameters of the optical imaging lens 100 of the first embodiment of the present invention are listed in following Table 1, including the focal length F of the optical imaging lens 100 (also called an effective focal length (EFL)), a F-number (Fno), a maximal field of view (FOV), a radius of curvature (R) of each lens, a distance (D) between each surface and the next surface on the optical axis Z, a refractive index (Nd) of each lens, an Abbe number (Vd) of each lens, the focal length of each lens, the focal length (cemented focal length) of the compound lens formed by adhering the fifth lens L5 and the sixth lens L6, wherein a unit of the focal length, the radius of curvature, and the distance is millimeter (mm). The data listed below are not a limitation of the present invention, wherein the parameters that could be appropriate changed by one with ordinary skill in the art after referring the present invention should still fall within the scope of the present invention.

Table 1

| F=8.16 mm; Fno=1.8; FOV=61 deg | | | | | | | |
|---|---|---|---|---|---|---|---|
| Surface | R(mm) | D(mm) | Nd | Vd | Focal length | Cemented focal length | Note |
| S1 | 9.9 | 1.87 | 1.52 | 64.14 | -22.8 | | L1 |
| S2 | 5.04 | 3.44 | | | | | |
| S3 | -14.32 | 1.25 | 1.59 | 39.24 | -13.68 | | L2 |
| S4 | 19.73 | 0.37 | | | | | |
| S5 | 48.53 | 3.95 | 1.85 | 3.27 | 16.94 | | L3 |
| S6 | -19.88 | 4.76 | | | | | |
| ST | Infinity | 0.44 | | | | | ST |
| S7 | 16.88 | 3.07 | 1.50 | 81.54 | 12.52 | | L4 |
| S8 | -9.3 | 0.1 | | | | | |
| S9 | 10.11 | 3.17 | 1.80 | 46.52 | 7.54 | -52.1 | L5 |
| S10, S11 | -13.16 | 1 | 1.72 | 29.52 | -5.32 | | L6 |
| S12 | 5.59 | 4.31 | | | | | |
| S13 | 11.27 | 3.28 | 1.52 | 64.14 | 21.33 | | L7 |
| S14 | -500 | 0.5 | | | | | |
| S15 | Infinity | 0.4 | 1.52 | 64.17 | Infinity | | Infrared filter L8 |
| S16 | Infinity | 2.01 | | | Infinity | | |
| S17 | Infinity | 0.5 | 1.52 | 64.17 | Infinity | | Protective glass L9 |
| S18 | Infinity | 0.5 | | | Infinity | | |
| Im | Infinity | | | | | | Im |

It can be seen from Table 1 that, in the current embodiment, the focal length F of the optical imaging lens 100 is 8.16 mm, and the Fno is 1.8, and the FOV is 61 degrees, wherein f1=-22.8 mm; f2=-13.68 mm; f3=16.94 mm; f4=12.52 mm; f5=7.54 mm; f6=-5.32 mm; f7=21.33 mm; f56=-52.1 mm; fg1=-23.83 mm; fg2=10.6 mm.

Additionally, based on the above detailed parameters, detailed values of the aforementioned conditional formula in the first embodiment are as follows: F/fg1=-0.34; F/f1=-0.36; F/f2=-0.60; F/f3=0.48; F/f4=0.65; F/f5=1.08; F/f6=-1.53; F/f7=0.38; F/f56=-0.16.

With the aforementioned design, the first lens assembly G1 and the second lens assembly G2 satisfy the aforementioned conditions (1) to (4) of the optical imaging lens 100.

Moreover, an aspheric surface contour shape Z of each of the object-side surface S7 of the fourth lens L4, and the image-side surface S8 of the fourth lens L4, and the object-side surface S13 of the seventh lens L7, and the image-side surface S14 of the seventh lens L7 of the optical imaging lens 100 according to the first embodiment could be obtained by following formula:

$$Z = \frac{ch^2}{1 + \sqrt{1 - (1+k)c^2h^2}} + A_4h^4 + A_6h^6 + A_8h^8 + A_{10}h^{10} + A_{12}h^{12} + A_{14}h^{14} + A_{16}h^{16}$$

wherein Z is aspheric surface contour shape; c is reciprocal of radius of curvature; h is half the off-axis height of the surface; k is conic constant; A4, A6, A8, A10, A12, A14, and A16 respectively represents different order coefficient of h.

The conic constant k of each of the object-side surface S7 of the fourth lens L4, and the image-side surface S8 of the fourth lens L4, and the object-side surface S13 of the seventh lens L7, and the image-side surface S14 of the seventh lens L7 of the optical imaging lens 100 according to the first embodiment and the different order coefficient of A4, A6, A8, A10, A12, A14, and A16 are listed in following Table 2:

Table 2

| Surface | S7 | S8 | S13 | S14 |
| --- | --- | --- | --- | --- |
| k | 0 | 0 | 0 | 0 |
| A4 | -3.8208E-04 | -7.7708E-05 | -3.0613E-04 | -4.2058E-04 |
| A6 | -1.0777E-05 | 4.3074E-06 | -1.0122E-05 | -3.8683E-05 |
| A8 | 1.1799E-06 | -1.0206E-06 | 3.9175E-07 | 2.6285E-06 |
| A10 | -1.7601E-07 | 2.8893E-08 | -1.6263E-08 | -1.4659E-07 |
| A12 | 1.0596E-08 | 3.3140E-10 | 9.1549E-11 | 4.4980E-09 |
| A14 | -2.9990E-10 | -5.4782E-11 | 0 | -7.4752E-11 |
| A16 | 2.1747E-12 | 4.0437E-13 | 0 | 4.8197E-13 |

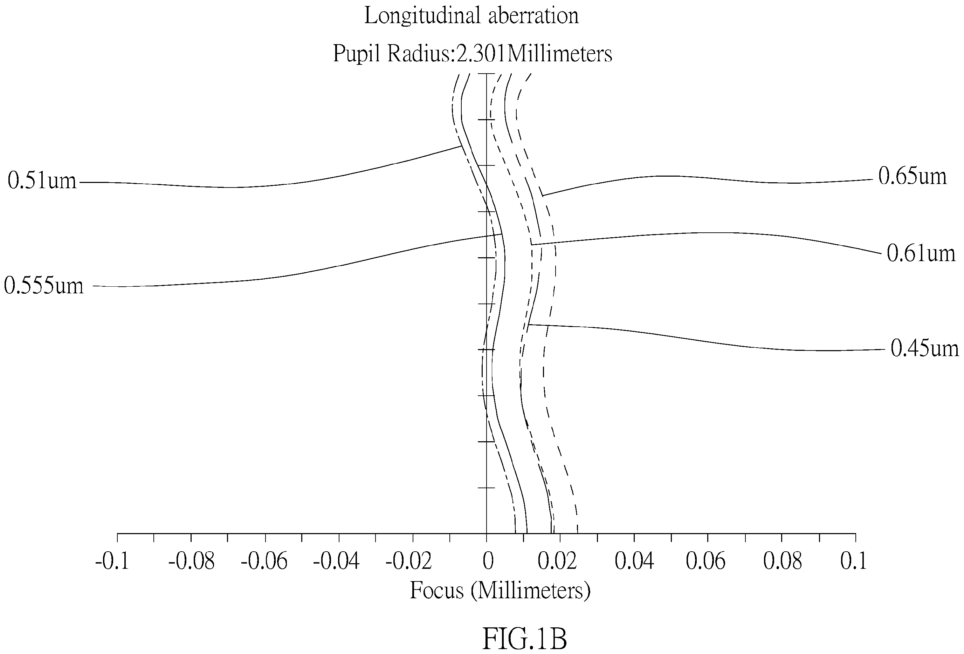

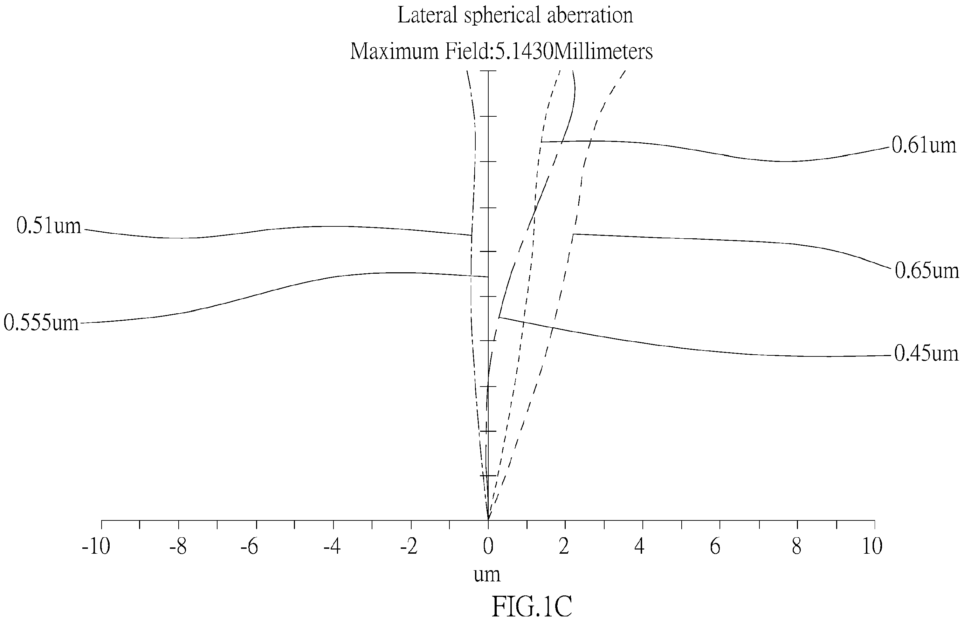

Taking optical simulation data to verify the imaging quality of the optical imaging lens 100, wherein FIG. 1B is a diagram showing the longitudinal spherical aberration according to the first embodiment; FIG. 1C is a diagram showing the lateral spherical aberration according to the first embodiment. The graphics shown in FIG. 1B and FIG. 1C are within a standard range. In this way, the optical imaging lens 100 of the first embodiment could effectively enhance image quality.

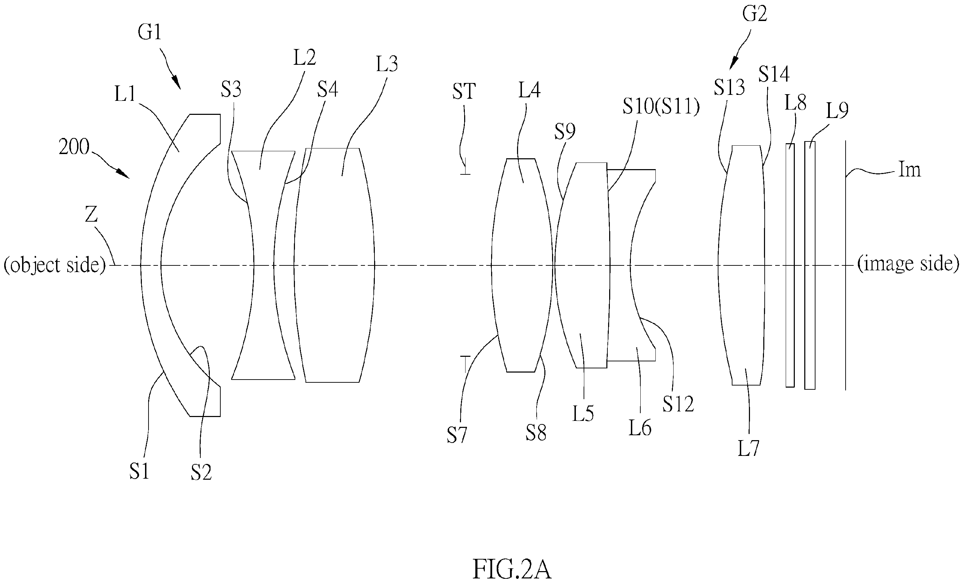

An optical imaging lens 200 according to a second embodiment of the present invention is illustrated in FIG. 2A, which includes, in order along an optical axis Z from an object side to an image side, a first lens assembly G1, an aperture ST, and a second lens assembly G2. In the current embodiment, the first lens assembly G1 includes, in order along the optical axis Z from the object side to the image side, a first lens L1, a second lens L2, and a third lens L3; the second lens assembly G2 includes, in order along the optical axis Z from the object side to the image side, a fourth lens L4, a fifth lens L5, a sixth lens L6, and a seventh lens L7.

The first lens L1 is a negative meniscus; an object-side surface S1 of the first lens L1 is a convex surface toward the object side, and an image-side surface S2 of the first lens L1 is a concave surface toward the image side. As shown in FIG. 2A, a part of a surface of the first lens L1 toward the image side is recessed to form the image-side surface S2, and the optical axis Z passes through the object-side surface S1 and the image-side surface S2 of the first lens L1.

The second lens L2 is a biconcave lens (i.e., both of an object-side surface S3 of the second lens L2 and an image-side surface S4 of the second lens L2 are concave surfaces) with negative refractive power.

The third lens is a biconvex lens (i.e., both of an object-side surface S5 of the third lens L3 and an image-side surface S6 of the third lens L3 are convex surfaces) with positive refractive power.

The fourth lens L4 is a biconvex lens (i.e., both of an object-side surface S7 of the fourth lens L4 and an image-side surface S8 of the fourth lens L4 are convex surfaces) with positive refractive power; the object-side surface S7, the image-side surface S8, or both of the object-side surface S7 and the image-side surface S8 of the fourth lens L4 are aspheric surfaces. As shown in FIG. 2A, both of the object-side surface S7 and the image-side surface S8 of the fourth lens L4 are aspheric surfaces.

The fifth lens L5 is a biconvex lens (i.e., both of an object-side surface S9 of the fifth lens L5 and an image-side surface S10 of the fifth lens L5 are convex surfaces) with positive refractive power. As shown in FIG. 2A, a part of a surface of the fifth lens L5 toward the image side is convex to form the image-side surface S10, and the optical axis Z passes through the object-side surface S9 and the image-side surface S10 of the fifth lens L5.

The sixth lens L6 is a biconcave lens (i.e., both of an object-side surface S11 of the sixth lens L6 and an image-side surface S12 of the sixth lens L6 are concave surfaces) with negative refractive power, wherein the obj ect-side surface S1 of the sixth lens L6 and the image-side surface S10 of the fifth lens L5 are adhered to form a same surface. As shown in FIG. 2A, a part of a surface of the sixth lens L6 toward the image side is recessed to form the image-side surface S12, and the optical axis Z passes through the object-side surface S11 and the image-side surface S12 of the sixth lens L6.

The seventh lens L7 is a biconvex lens (i.e., both of an object-side surface S13 of the seventh lens L7 and an image-side surface S14 of the seventh lens L7 are convex surfaces) with positive refractive power; the object-side surface S13, the image-side surface S14, or both of the object-side surface S13 and the image-side surface S14 of the seventh lens L7 are aspheric surfaces. As shown in FIG. 2A, both of the obj ect-side surface S13 and the image-side surface S14 of the seventh lens L7 are aspheric surfaces.

Additionally, the optical imaging lens 200 further includes an infrared filter L8 and a protective glass L9, wherein the infrared filter L8 is disposed between the seventh lens L7 and the protective glass L9 and is closer to the protective glass L9 than the image-side surface S14 of the seventh lens L7, thereby filtering out excess infrared rays in an image light passing through the first lens assembly G1 and the second lens assembly G2. The protective glass L9 for protecting the infrared filter L8 is disposed between the infrared filter L8 and an image plane Im of the optical imaging lens 200 and is closer to the infrared filter L8 than the image plane Im.

In order to keep the optical imaging lens 200 in good optical performance and high imaging quality, the optical imaging lens 200 further satisfies:

(1) $-0.5<F/fg1<-0.1$;
(2) $-0.15<F/f1<-0.45$; $-0.8<F/f2<-0.5$; $0.4<F/f3<0.7$;
(3) $0.5<F/f4<0.7$; $0.7<F/f5<1.5$; $-1.7<F/f6<-1$; $0.2<F/f7<0.6$;
(4) $-0.25<F/f56<-0.1$;

wherein F is a focal length of the optical imaging lens 200; f1 is a focal length of the first lens L1; f2 is a focal length of the second lens L2; f3 is a focal length of the third lens L3; f4 is a focal length of the fourth lens L4; f5 is a focal length of the fifth lens L5; f6 is a focal length of the sixth lens L6; f56 is a focal length of a compound lens formed by adhering the fifth lens L5 and the sixth lens L6; f7 is a focal length of the seventh lens L7; fg1 is a focal length of the first lens assembly G1; fg2 is a focal length of the second lens assembly G2.

Parameters of the optical imaging lens 200 of the second embodiment of the present invention are listed in following Table 3, including the focal length F of the optical imaging lens 200 (also called an effective focal length (EFL)), a F-number (Fno), a maximal field of view (FOV), a radius of curvature (R) of each lens, a distance (D) between each surface and the next surface on the optical axis Z, a refractive index (Nd) of each lens, an Abbe number (Vd) of each lens, the focal length of each lens, the focal length (cemented focal length) of the compound lens formed by adhering the fifth lens L5 and the sixth lens L6, wherein a unit of the focal length, the radius of curvature, and the distance is millimeter (mm). The data listed below are not a limitation of the present invention, wherein the parameters that could be appropriate changed by one with ordinary skill in the art after referring the present invention should still fall within the scope of the present invention.

Table 3

| Surface | R(mm) | D(mm) | Nd | Vd | Focal length | Cemented focal length | Note |
|---|---|---|---|---|---|---|---|
| | | | F=6.96 mm; Fno=1.7; FOV=65 deg | | | | |
| S1 | 9.31 | 0.95 | 1.58 | 59.37 | -28.855 | | L1 |
| S2 | 5.77 | 4.37 | | | | | |
| S3 | -10.93 | 0.95 | 1.59 | 35.31 | -9.028 | | L2 |
| S4 | 10.93 | 0.96 | | | | | |
| S5 | 20.3 | 3.8 | 1.85 | 32.27 | 10.932 | | L3 |
| S6 | -15.3 | 4.28 | | | | | |
| ST | Infinity | 1.22 | | | | | ST |
| S7 | 12.25 | 2.9 | 1.49 | 81.55 | 11.905 | | L4 |
| S8 | -10.6 | 0.09 | | | | | |

(continued)

| F=6.96 mm; Fno=1.7; FOV=65 deg | | | | | | | |
|---|---|---|---|---|---|---|---|
| Surface | R(mm) | D(mm) | Nd | Vd | Focal length | Cemented focal length | Note |
| S9 | 8.4 | 2.6 | 1.83 | 42.74 | 8.766 | -36.9 | L5 |
| S10, S11 | -50.48 | 0.95 | 1.84 | 23.77 | -5.714 | | L6 |
| S12 | 5.44 | 4.17 | | | | | |
| S13 | 16.11 | 2.17 | 1.85 | 40.1 | 18.253 | | L7 |
| S14 | -474.67 | 1 | | | | | |
| S15 | Infinity | 0.4 | 1.52 | 64.17 | | | Infrared filter L8 |
| S16 | Infinity | 0.6 | | | | | |
| S17 | Infinity | 0.5 | 1.52 | 64.17 | | | Protective glass L9 |
| S18 | Infinity | 0.5 | | | | | |
| Im | Infinity | | | | | | Im |

It can be seen from Table 3 that, in the second embodiment, the focal length (F) of the optical imaging lens 200 is 6.96 mm, and the Fno is 1.7, and the FOV is 65 degrees, wherein f1=-28.855 mm; f2=-9.028 mm; f3=10.932 mm; f4=11.905 mm; f5=8.766 mm; f6=-5.714 mm; f7=18.253 mm; f56=-36.9 mm; fg1=-48.86; fg2=10.34mm.

Additionally, based on the above detailed parameters, detailed values of the aforementioned conditional formula in the second embodiment are as follows: F/fg1=-0.14; F/f1=-0.24; F/f2=-0.77; F/f3=0.64; F/f4=0.58; F/f5=0.79; F/f6=-1.22; F/f7=0.38; F/f56=-0.19.

With the aforementioned design, the first lens assembly G1 and the second lens assembly G2 satisfy the aforementioned conditions (1) to (4) of the optical imaging lens 200.

Moreover, an aspheric surface contour shape Z of each of the object-side surface S7 of the fourth lens L4, and the image-side surface S8 of the fourth lens L4, and the object-side surface S13 of the seventh lens L7, and the image-side surface S14 of the seventh lens L7 of the optical imaging lens 200 according to the second embodiment could be obtained by following formula:

$$Z = \frac{ch^2}{1+\sqrt{1-(1+k)c^2h^2}} + A_4h^4 + A_6h^6 + A_8h^8 + A_{10}h^{10} + A_{12}h^{12} + A_{14}h^{14} + A_{16}h^{16}$$

wherein Z is aspheric surface contour shape; c is reciprocal of radius of curvature; h is half the off-axis height of the surface; k is conic constant; A4, A6, A8, A10, A12, A14, and A16 respectively represents different order coefficient of h.

The conic constant k of each of the object-side surface S7 of the fourth lens L4, and the image-side surface S8 of the fourth lens L4, and the object-side surface S13 of the seventh lens L7, and the image-side surface S14 of the seventh lens L7 of the optical imaging lens 200 according to the second embodiment and the different order coefficient of A4, A6, A8, A10, A12, A14, and A16 are listed in following Table 4:

Table 4

| Surface | S7 | S8 | S13 | S14 |
|---|---|---|---|---|
| k | -1.82E+00 | -2.9859E-01 | 0 | 0 |
| A4 | -3.9779E-05 | 1.2811E-04 | -8.3237E-05 | -1.4587E-04 |
| A6 | 1.0271E-06 | 8.8700E-06 | -1.2341E-06 | -7.5893E-06 |
| A8 | -1.6784E-07 | -8.8808E-07 | 0 | -9.2476E-09 |
| A10 | 2.1746E-08 | 4.7534E-08 | 0 | 0 |
| A12 | -5.1964E-10 | -8.0675E-10 | 0 | 0 |
| A14 | 0 | 0 | 0 | 0 |

(continued)

| Surface | S7 | S8 | S13 | S14 |
|---------|----|----|-----|-----|
| A16 | 0 | 0 | 0 | 0 |

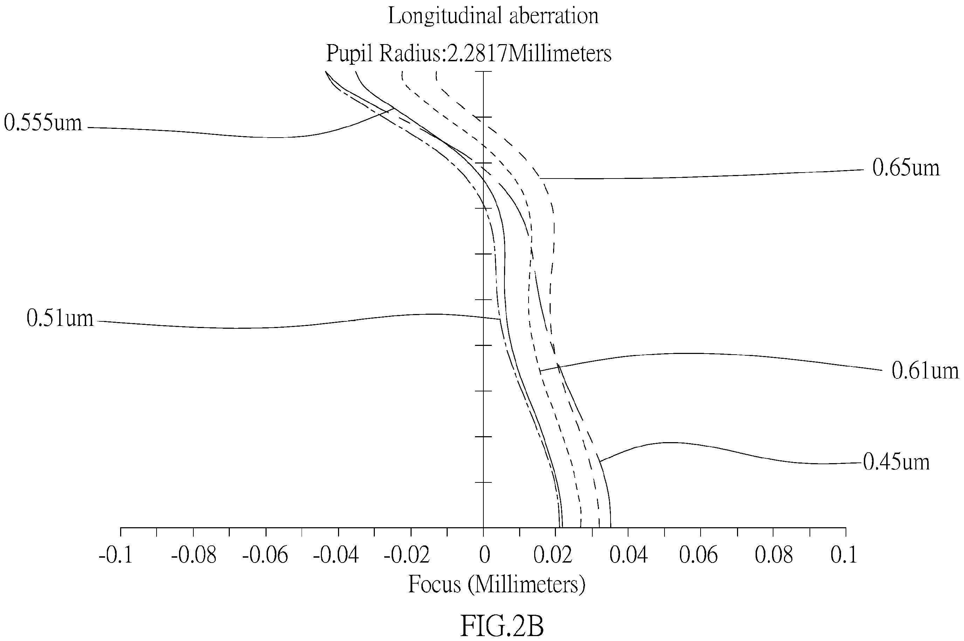

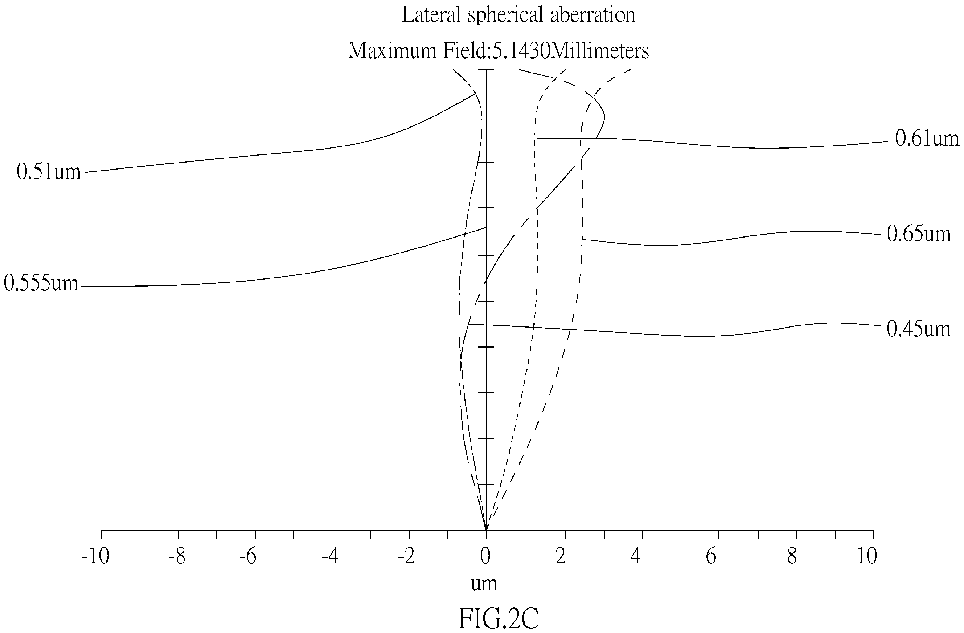

Taking optical simulation data to verify the imaging quality of the optical imaging lens 200, wherein FIG. 2B is a diagram showing the longitudinal spherical aberration according to the second embodiment; FIG. 2C is a diagram showing the lateral spherical aberration according to the second embodiment. The graphics shown in FIG. 2B and FIG. 2C are within a standard range. In this way, the optical imaging lens 200 of the second embodiment could effectively enhance image quality.

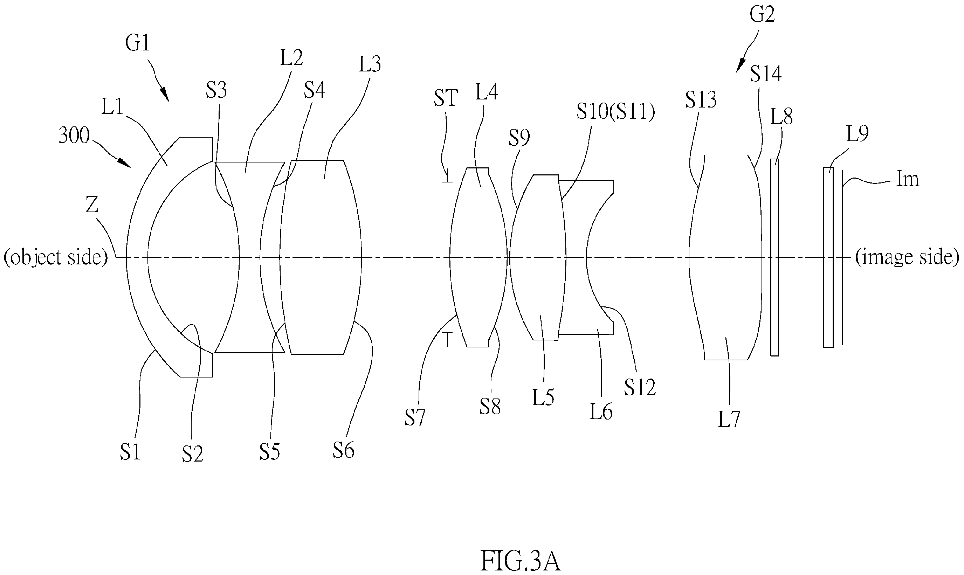

An optical imaging lens 300 according to a third embodiment of the present invention is illustrated in FIG. 3A, which includes, in order along an optical axis Z from an object side to an image side, a first lens assembly G1, an aperture ST, and a second lens assembly G2. In the current embodiment, the first lens assembly G1 includes, in order along the optical axis Z from the object side to the image side, a first lens L1, a second lens L2, and a third lens L3; the second lens assembly G2 includes, in order along the optical axis Z from the object side to the image side, a fourth lens L4, a fifth lens L5, a sixth lens L6, and a seventh lens L7.

The first lens L1 is a negative meniscus; an object-side surface S1 of the first lens L1 is a convex surface toward the object side, and an image-side surface S2 of the first lens L1 is a concave surface toward the image side. As shown in FIG. 3A, a part of a surface of the first lens L1 toward the image side is recessed to form the image-side surface S2, and the optical axis Z passes through the object-side surface S1 and the image-side surface S2 of the first lens L1.

The second lens L2 is a biconcave lens (i.e., both of an object-side surface S3 of the second lens L2 and an image-side surface S4 of the second lens L2 are concave surfaces) with negative refractive power.

The third lens is a biconvex lens (i.e., both of an object-side surface S5 of the third lens L3 and an image-side surface S6 of the third lens L3 are convex surfaces) with positive refractive power.

The fourth lens L4 is a biconvex lens (i.e., both of an object-side surface S7 of the fourth lens L4 and an image-side surface S8 of the fourth lens L4 are convex surfaces) with positive refractive power; the object-side surface S7, the image-side surface S8, or both of the object-side surface S7 and the image-side surface S8 of the fourth lens L4 are aspheric surfaces. As shown in FIG. 3A, both of the object-side surface S7 and the image-side surface S8 of the fourth lens L4 are aspheric surfaces.

The fifth lens L5 is a biconvex lens (i.e., both of an object-side surface S9 of the fifth lens L5 and an image-side surface S10 of the fifth lens L5 are convex surfaces) with positive refractive power. As shown in FIG. 3A, a part of a surface of the fifth lens L5 toward the image side is convex to form the image-side surface S10, and the optical axis Z passes through the object-side surface S9 and the image-side surface S10 of the fifth lens L5.

The sixth lens L6 is a biconcave lens (i.e., both of an object-side surface S11 of the sixth lens L6 and an image-side surface S12 of the sixth lens L6 are concave surfaces) with negative refractive power, wherein the obj ect-side surface S1 of the sixth lens L6 and the image-side surface S10 of the fifth lens L5 are adhered to form a same surface. The fifth lens L5 is engaged with the sixth lens L6 to form a compound lens with negative refractive power.

The seventh lens L7 is a biconvex lens (i.e., both of an object-side surface S13 of the seventh lens L7 and an image-side surface S14 of the seventh lens L7 are convex surfaces) with positive refractive power; the object-side surface S13, the image-side surface S14, or both of the object-side surface S13 and the image-side surface S14 of the seventh lens L7 are aspheric surfaces. As shown in FIG. 3A, both of the object-side surface S13 and the image-side surface S14 of the seventh lens L7 are aspheric surfaces.

Additionally, the optical imaging lens 300 further includes an infrared filter L8 and a protective glass L9, wherein the infrared filter L8 is disposed between the seventh lens L7 and the protective glass L9 and is closer to the image-side surface S14 of the seventh lens L7 than the protective glass L9, thereby filtering out excess infrared rays in an image light passing through the first lens assembly G1 and the second lens assembly G2. The protective glass L9 for protecting the infrared filter L8 is disposed between the infrared filter L8 and an image plane Im of the optical imaging lens 300 and is closer to the image plane Im than the infrared filter L8.

In order to keep the optical imaging lens 300 in good optical performance and high imaging quality, the optical imaging lens 300 further satisfies:

(1) $-0.5 < F/fg1 < -0.1$;
(2) $-0.15 < F/f1 < -0.45$; $-0.8 < F/f2 < -0.5$; $0.4 < F/f3 < 0.7$;
(3) $0.5 < F/f4 < 0.7$; $0.7 < F/f5 < 1.5$; $-1.7 < F/f6 < -1$; $0.2 < F/f7 < 0.6$;
(4) $-0.25 < F/f56 < -0.1$;

wherein F is a focal length of the optical imaging lens 300; f1 is a focal length of the first lens L1; f2 is a focal length of the second lens L2; f3 is a focal length of the third lens L3; f4 is a focal length of the fourth lens L4; f5 is a focal length of the fifth lens L5; f6 is a focal length of the sixth lens L6; f56 is a focal length of a compound lens formed by adhering the fifth lens L5 and the sixth lens L6; f7 is a focal length of the seventh lens L7; fg1 is a focal length of the first lens assembly G1; fg2 is a focal length of the second lens assembly G2.

Parameters of the optical imaging lens 300 of the third embodiment of the present invention are listed in following Table 5, including the focal length F of the optical imaging lens 300 (also called an effective focal length (EFL)), a F-number (Fno), a maximal field of view (FOV), a radius of curvature (R) of each lens, a distance (D) between each surface and the next surface on the optical axis Z, a refractive index (Nd) of each lens, an Abbe number (Vd) of each lens, the focal length of each lens, the focal length (cemented focal length) of the compound lens formed by adhering the fifth lens L5 and the sixth lens L6, wherein a unit of the focal length, the radius of curvature, and the distance is millimeter (mm). The data listed below are not a limitation of the present invention, wherein the parameters that could be appropriate changed by one with ordinary skill in the art after referring the present invention should still fall within the scope of the present invention.

Table 5

| F=7.73 mm; Fno=1.8; FOV=60 deg | | | | | | | |
|---|---|---|---|---|---|---|---|
| Surface | R(mm) | D(mm) | Nd | Vd | Focal length | Cemented focal length | Note |
| S1 | 10.48 | 1.08 | 1.83 | 37.16 | -23.15 | | L1 |
| S2 | 6.49 | 4.85 | | | | | |
| S3 | -12.86 | 1.08 | 1.54 | 59.46 | -11.69 | | L2 |
| S4 | 12.86 | 1.04 | | | | | |
| S5 | 27.73 | 4.3 | 1.85 | 32.27 | 13.34 | | L3 |
| S6 | -18.00 | 4.5 | | | | | |
| ST | Infinity | 0.11 | | | | | ST |
| S7 | 13.89 | 3.05 | 1.49 | 81.55 | 13.87 | | L4 |
| S8 | -12.76 | 0.11 | | | | | |
| S9 | 9 | 2.98 | 1.83 | 42.71 | 8.32 | -43.64 | L5 |
| S10, S11 | -26.44 | 1.08 | 1.84 | 23.77 | -5.54 | | L6 |
| S12 | 5.87 | 5.39 | | | | | |
| S13 | 15.02 | 3.81 | 1.85 | 40.1 | 16.63 | | L7 |
| S14 | -237.39 | 0.5 | | | | | |
| S15 | Infinity | 0.4 | 1.52 | 64.17 | Infinity | | Infrared filter L8 |
| S16 | Infinity | 0.8 | | | Infinity | | |
| S17 | Infinity | 0.5 | 1.52 | 64.17 | Infinity | | Protective glass L9 |
| S18 | Infinity | 0.5 | | | Infinity | | |
| Im | Infinity | | | | | | Im |

It can be seen from Table 5 that, in the current embodiment, the focal length F of the optical imaging lens 300 is 7.73 mm, and the Fno is 1.8, and the FOV is 60 degrees, wherein f1=-23.15 mm; f2=-11.69 mm; f3=13.34 mm; f4=13.87 mm; f5=8.32 mm; f6=-5.54 mm; f7=16.63 mm; f56=-43.64 mm; fg1=-40.18; fg2=11.91 mm.

Additionally, based on the above detailed parameters, detailed values of the aforementioned conditional formula in the third embodiment are as follows: F/fg1=-0.19; F/f1=-0.33; F/f2=-0.66; F/f3=0.58; F/f4=0.56; F/f5=0.93; F/f6=-1.4; F/f7=0.46; F/f56=-0.18.

With the aforementioned design, the first lens assembly G1 and the second lens assembly G2 satisfy the aforementioned conditions (1) to (4) of the optical imaging lens 300.

Moreover, an aspheric surface contour shape Z of each of the object-side surface S7 of the fourth lens L4, and the image-side surface S8 of the fourth lens L4, and the object-side surface S13 of the seventh lens L7, and the image-side surface S14 of the seventh lens L7 of the optical imaging lens 300 according to the third embodiment could be obtained by following formula:

$$Z = \frac{ch^2}{1+\sqrt{1-(1+k)c^2h^2}} + A_4h^4 + A_6h^6 + A_8h^8 + A_{10}h^{10} + A_{12}h^{12} + A_{14}h^{14} + A_{16}h^{16}$$

wherein Z is aspheric surface contour shape; c is reciprocal of radius of curvature; h is half the off-axis height of the surface; k is conic constant; A4, A6, A8, A10, A12, A14, and A16 respectively represents different order coefficient of h.

The conic constant k of each of the object-side surface S7 of the fourth lens L4, and the image-side surface S8 of the fourth lens L4, and the object-side surface S13 of the seventh lens L7, and the image-side surface S14 of the seventh lens L7 of the optical imaging lens 300 according to the third embodiment and the different order coefficient of A4, A6, A8, A10, A12, A14, and A16 are listed in following Table 6:

Table 6

| Surface | S7 | S8 | S13 | S14 |
|---|---|---|---|---|
| k | 0 | 0 | 0 | 0 |
| A4 | -1.4104E-04 | -3.5507E-05 | -1.6821E-04 | -2.5282E-04 |
| A6 | 3.6745E-06 | 1.7278E-05 | -5.6598E-06 | -8.7007E-06 |
| A8 | -4.9187E-07 | -2.2853E-06 | 2.4283E-07 | 1.5857E-07 |
| A10 | 2.9911E-08 | 1.7762E-07 | -9.2864E-09 | -3.6268E-09 |
| A12 | -8.8101E-10 | -7.9416E-09 | 1.1016E-10 | 4.0792E-11 |
| A14 | 9.4650E-12 | 1.8904E-10 | 0 | 0 |
| A16 | 0 | -1.8689E-12 | 0 | 0 |

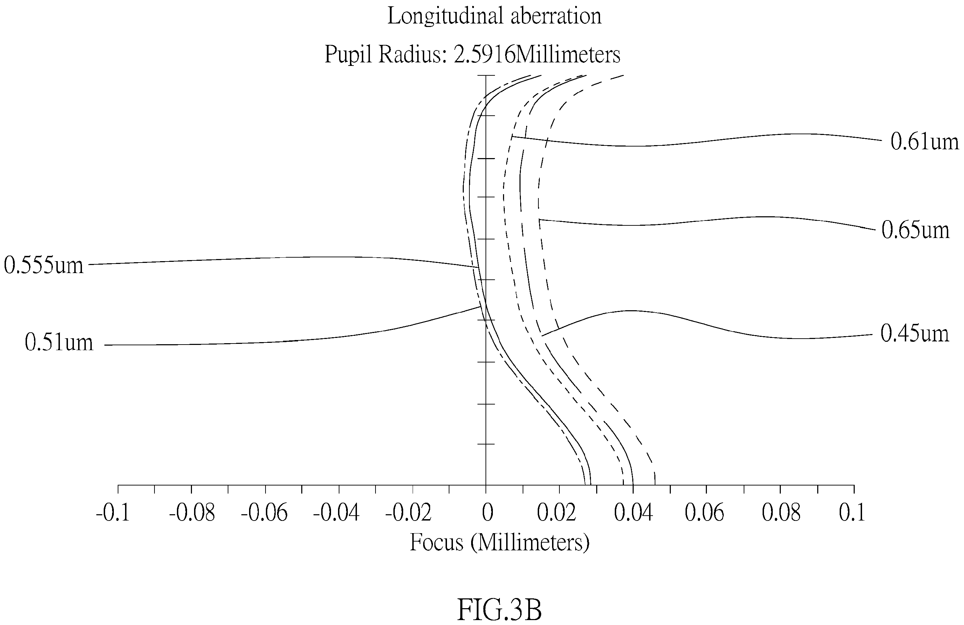

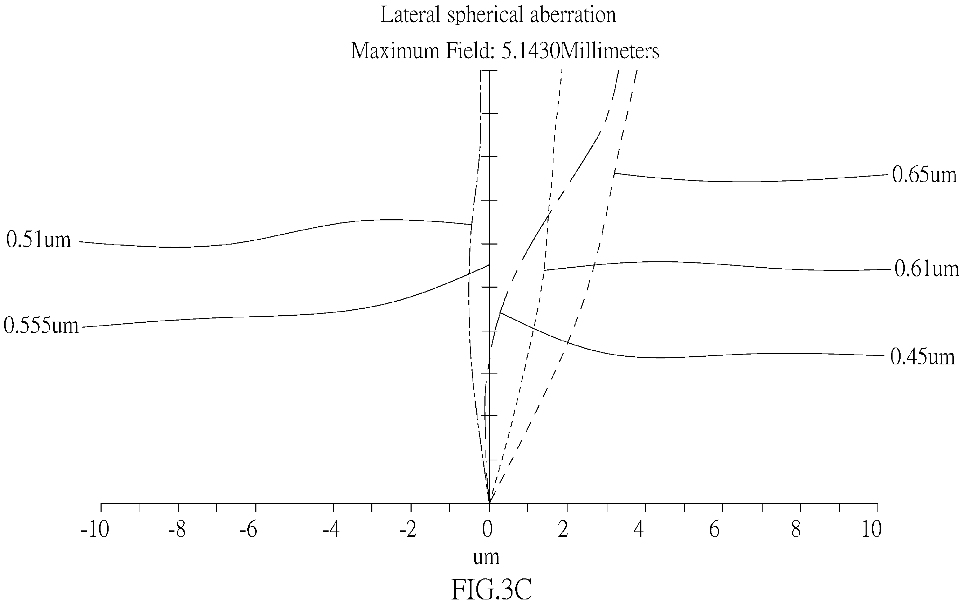

Taking optical simulation data to verify the imaging quality of the optical imaging lens 300, wherein FIG. 3B is a diagram showing the longitudinal spherical aberration according to the third embodiment; FIG. 3C is a diagram showing the lateral spherical aberration according to the third embodiment. The graphics shown in FIG. 3B and FIG. 3C are within a standard range. In this way, the optical imaging lens 300 of the third embodiment could effectively enhance image quality.

## Claims

1.  An optical imaging lens (100, 200, 300), in order from an object side to an image side along an optical axis, comprising:

    a first lens assembly (G1) comprising, in order from the object side to the image side along the optical axis, a first lens (L1) having negative refractive power, a second lens (L2) that is a biconcave lens having negative refractive power, and a third lens (L3) that is a biconvex lens having positive refractive power, wherein an object-side surface (S1) of the first lens (L1) is a convex surface toward the object side, and an image-side surface (S2) of the first lens (L1) is a concave surface toward the image side;
    an aperture;
    a second lens assembly (G2) comprising, in order from the object side to the image side along the optical axis, a fourth lens (L4) that is a biconvex lens having positive refractive power, a fifth lens (L5) that is a biconvex lens having positive refractive power, a sixth lens (L6) that is a biconcave lens having negative refractive power, and a seventh lens (L7) that is a biconvex lens having positive refractive power, wherein an object-side surface (S7) of the fourth lens (L4) and/or an image-side surface (S8) of the fourth lens (L4) are/is an aspheric surface; an object-side surface (S11) of the sixth lens (L6) and an image-side surface (S12) of the fifth lens (L5) are adhered to form a compound lens having negative refractive power; an object-side surface (S13) of the seventh lens (L7) and/or an image-side surface (S14) of the seventh lens (L7) are/is an aspheric surface;
    wherein the optical imaging lens (100, 200, 300) satisfies: -0.5<F/fg1<-0.1; F is a focal length of the optical imaging lens (100, 200, 300) and fg1 is a focal length of the first lens assembly (G1).

2.  The optical imaging lens (100, 200, 300) as claimed in claim 1, wherein the optical imaging lens (100, 200, 300) satisfies: -0.15<F/f1<-0.45, wherein F is a focal length of the optical imaging lens (100, 200, 300); f1 is a focal length of the first lens (L1).

3. The optical imaging lens (100, 200, 300) as claimed in claim 1, wherein the optical imaging lens (100, 200, 300) satisfies: -0.8<F/f2<-0.5, wherein F is a focal length of the optical imaging lens (100, 200, 300); f2 is a focal length of the second lens (L2).

4. The optical imaging lens (100, 200, 300) as claimed in claim 1, wherein the optical imaging lens (100, 200, 300) satisfies: 0.4<F/f3<0.7, wherein F is the focal length of the optical imaging lens (100, 200, 300); f3 is a focal length of the third lens (L3).

5. The optical imaging lens (100, 200, 300) as claimed in claim 1, wherein the optical imaging lens (100, 200, 300) satisfies: 0.5<F/f4<0.7, wherein F is a focal length of the optical imaging lens (100, 200, 300); f4 is a focal length of the fourth lens (L4).

6. The optical imaging lens (100, 200, 300) as claimed in claim 1, wherein the optical imaging lens (100, 200, 300) satisfies: -0.25<F/f56<-0.1, wherein F is a focal length of the optical imaging lens (100, 200, 300); f56 is a focal length of the compound lens formed by adhering the fifth lens (L5) and the sixth lens (L6).

7. The optical imaging lens (100, 200, 300) as claimed in claims 6, wherein the optical imaging lens (100, 200, 300) satisfies: 0.7<F/f5<1.5, wherein F is the focal length of the optical imaging lens (100, 200, 300); f5 is a focal length of the fifth lens (L5).

8. The optical imaging lens (100, 200, 300) as claimed in claims 6, wherein the optical imaging lens (100, 200, 300) satisfies: -1.7<F/f6<-1, wherein F is the focal length of the optical imaging lens (100, 200, 300); f6 is a focal length of the sixth lens (L6).

9. The optical imaging lens (100, 200, 300) as claimed in claims 1, wherein the optical imaging lens (100, 200, 300) satisfies: 0.2<F/f7<0.6, wherein F is a focal length of the optical imaging lens (100, 200, 300); f7 is a focal length of the seventh lens (L7).

10. The optical imaging lens (100, 200, 300) as claimed in claims 1, wherein both of the object-side surface (S7) and the image-side surface (S8) of the fourth lens (L4) are aspheric surfaces.

11. The optical imaging lens (100, 200, 300) as claimed in claims 1, wherein both of the object-side surface (S13) and the image-side surface (S14) of the seventh lens (L7) are aspheric surfaces.

FIG.1A

Longitudinal aberration

Pupil Radius:2.301Millimeters

FIG.1B

EP 4 215 969 A1

Lateral spherical aberration

Maximum Field:5.1430Millimeters

FIG.1C

EP 4 215 969 A1

FIG.2A

FIG.2B

Lateral spherical aberration

Maximum Field:5.1430Millimeters

0.61um

0.51um

0.65um

0.555um

0.45um

-10   -8   -6   -4   -2   0   2   4   6   8   10

um

FIG.2C

EP 4 215 969 A1

FIG.3A

EP 4 215 969 A1

Longitudinal aberration

Pupil Radius: 2.5916Millimeters

0.61um

0.65um

0.555um

0.45um

0.51um

-0.1  -0.08  -0.06  -0.04  -0.02   0   0.02  0.04  0.06  0.08  0.1

Focus (Millimeters)

FIG.3B

EP 4 215 969 A1

Lateral spherical aberration

Maximum Field: 5.1430Millimeters

0.65um

0.51um

0.61um

0.555um

0.45um

-10   -8   -6   -4   -2   0   2   4   6   8   10

um

FIG.3C

Europäisches
Patentamt

European
Patent Office

Office européen
des brevets

# EUROPEAN SEARCH REPORT

Application Number

EP 22 20 5496

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/301106 A1 (JUNG PIL SUN [KR] ET AL) 24 September 2020 (2020-09-24) * paragraphs [0072] – [0072]; figure 3; table 2 * | 1-11 | INV. G02B13/00 G02B9/64 |
| Y | CN 112 068 291 A (NINGBO SUNNY AUTOMOTIVE OPTICAL TECH CO LTD) 11 December 2020 (2020-12-11) * the whole document * | 1-11 | |
| A | CN 110 161 656 A (NINGBO YONGXIN OPTICS CO LTD) 23 August 2019 (2019-08-23) * the whole document * | 1 | |
| A | US 2003/043474 A1 (MINEFUJI NOBUTAKA [JP]) 6 March 2003 (2003-03-06) * paragraphs [0100] – [0104] * | 1 | |
| A | JP 2009 204699 A (TAMRON KK) 10 September 2009 (2009-09-10) * paragraphs [0039] – [0054] * | 1 | TECHNICAL FIELDS SEARCHED (IPC) |
| A | US 2011/292519 A1 (ENOMOTO TAKASHI [JP]) 1 December 2011 (2011-12-01) * paragraphs [0033] – [0046] * | 1 | G02B |

The present search report has been drawn up for all claims

| Place of search | Date of completion of the search | Examiner |
|---|---|---|
| Munich | 16 June 2023 | Stemmer, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 5496

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2023

| Patent document cited in search report | | Publication date | Patent family member(s) | | Publication date |
|---|---|---|---|---|---|
| US 2020301106 | A1 | 24-09-2020 | KR 20170109859 | A | 10-10-2017 |
| | | | US 2020301106 | A1 | 24-09-2020 |
| | | | WO 2017164607 | A1 | 28-09-2017 |
| CN 112068291 | A | 11-12-2020 | NONE | | |
| CN 110161656 | A | 23-08-2019 | NONE | | |
| US 2003043474 | A1 | 06-03-2003 | DE 10212171 | A1 | 26-09-2002 |
| | | | JP 3709148 | B2 | 19-10-2005 |
| | | | JP 2002277740 | A | 25-09-2002 |
| | | | US 2003043474 | A1 | 06-03-2003 |
| JP 2009204699 | A | 10-09-2009 | JP 5265218 | B2 | 14-08-2013 |
| | | | JP 2009204699 | A | 10-09-2009 |
| US 2011292519 | A1 | 01-12-2011 | CN 102262291 | A | 30-11-2011 |
| | | | DE 102011050663 | A1 | 01-12-2011 |
| | | | JP 2011248049 | A | 08-12-2011 |
| | | | US 2011292519 | A1 | 01-12-2011 |

EPO FORM P0459

For more details about this annex : see Official Journal of the European Patent Office, No. 12/82